# EUROPÄISCHE PATENTSCHRIFT

(11) **EP 3 448 743 B1**
(45) Veröffentlichungstag und Bekanntmachung des Hinweises auf die Patenterteilung: **30.03.2022**
(21) Anmeldenummer: 17722663.6
(22) Anmeldetag: 07.04.2017
(51) Int. Cl.: B62D 17/00, B60G 7/02, B60G 9/00, B25B 27/00

(54) **LENKERANORDNUNG FÜR EIN FAHRZEUG UND VERFAHREN ZUM VERSCHIEBEN EINES ACHSLENKERS**
SUSPENSION ARRANGEMENT FOR A VEHICLE AND METHOD FOR ALIGNING A SUSPENSION ARM
ARRANGEMENT DE SUSPENSION POUR UN VÉHICULE ET PROCÉDÉ POUR ALIGNER UN BRAS DE SUSPENSION

(30) Priorität: 28.04.2016 DE 102016107852
(43) Veröffentlichungstag der Anmeldung: 06.03.2019
(73) Patentinhaber: BPW Bergische Achsen KG, 51674 Wiehl (DE)
(72) Erfinder: MICHELS, Manfred, 51067 Köln (DE); RHEIN, Bernd, 51491 Overath (DE)
(74) Vertreter: Janke Scholl Patentanwälte PartG mbB
(86) Internationale Anmeldenummer: PCT/DE2017/100281
(87) Internationale Veröffentlichungsnummer: WO 2017/186212

(56) Entgegenhaltungen:
- EP-B1- 1 383 672
- EP-B1- 1 466 107
- WO-A1-02/090170
- DE-A1- 19 603 612
- DE-A1-102007 032 242
- DE-A1-102010 055 060
- US-A- 4 267 896
- US-A- 4 493 493
- US-A- 5 301 977
- US-A- 5 549 319
- US-A1- 2005 146 105
- US-A1- 2006 181 044
- US-A1- 2008 036 167
- US-A1- 2008 236 969
- US-B1- 6 227 554
- US-B1- 9 315 222

## Beschreibung

Die Erfindung betrifft eine Lenkeranordnung für ein Fahrzeug mit mindestens einem sich in Fahrzeuglängsrichtung erstreckenden Achslenker, einem an dem Achslenker quer zur Fahrzeuglängsrichtung befestigten Achskörper, einer chassisfest montierten Stütze zur schwenkbaren Lagerung des Achslenkers mittels eines durch die Stütze und den Achslenker quer zur Fahrzeuglängsrichtung hindurchführenden Bolzens, Verstellmitteln zum Verschieben des Achslenkers relativ zu der Stütze in Fahrzeuglängsrichtung, sowie Positioniermitteln zum Fixieren der Längsposition des Achslenkers relativ zu der Stütze, wobei die Verstellmittel aus mindestens einer Angriffsfläche an dem Achslenker oder einem achslenkerfesten Bauteil, sowie mindestens einer chassisfesten Abstützfläche zur Anlage eines Hebelwerkzeugs bestehen.

Die Erfindung betrifft ferner ein Verfahren zum Verschieben eines Achslenkers in Fahrzeuglängsrichtung eines Fahrzeugs, wobei der Achslenker Bestandteil einer sich in Fahrzeuglängsrichtung erstreckenden Lenkeranordnung ist, einen sich quer zur Fahrzeuglängsrichtung erstreckenden Achskörper einer Fahrzeugachse kreuzt, an einer chassisfest montierten Stütze mittels eines durch die Stütze und den Achslenker quer zur Fahrzeuglängsrichtung hindurchführenden Bolzens schwenkbar gelagert ist, mittels Verstellmitteln relativ zu der Stütze in Fahrzeuglängsrichtung verschiebbar ist, mittels Positioniermitteln bezüglich seiner Längsposition relativ zu der Stütze fixierbar ist.

Die Spureinstellung von Nutzfahrzeuganhängern, respektive die Ausrichtung von Achslenkern entlang der Fahrzeuglängsrichtung, wird im Allgemeinen durch ExzenterAnordnungen oder Spureinstellplatten vollzogen. Solche Lösungen bedürfen in der Regel der zusätzlichen Montage von Exzenterscheiben bzw. Spureinstellplatten am Achslenker bzw. zwischen dem Achslenker und der chassisfesten Stütze. Der Achslenker ist innerhalb der Stütze schwenkbar gelagert. Bei der Spureinstellung über Exzenterscheiben und Spureinstellplatten ist es oft nötig, die festsitzenden Bauteile durch ruckartige Bewegungen wie etwa einem Hammerschlag zu verschieben. Die Exzenterscheibe bzw. Spureinstellplatte leitet die erzeugte Bewegung auf den Achslenker um, und erwirkt eine Verschiebung des Achslenkers entlang der Fahrzeuglängsrichtung. Neben dem erheblichen Montageaufwand bei der Befestigung zusätzlicher Bauteile und der damit einhergehenden Kostensteigerung, kann aus der Schlagbeanspruchung eine Materialschädigung resultieren. Dies können insbesondere Oberflächenschädigungen wie Lackabplatzungen samt gesteigerter Korrosionsgefahr oder auch der schlaginduzierte Verlust der Bauteilschnittigkeit sein.

In der US 6,550,795 ist ein Mechanismus zur Ausrichtung eines Längslenkers und einer daran befestigten Querachse in Fahrzeuglängsrichtung gezeigt. Am Fahrzeugchassis ist eine Stütze für den Längslenker befestigt, welcher einen Stoßdämpfer, einen Achskörper und eine Luftfeder trägt, die wiederum an ihrer Oberseite mit dem Fahrzeugchassis verbunden ist. Die Stütze ist mit Langlöchern versehen, die einer Öffnung im Längslenker gegenüberliegen. Die Befestigung des Längslenkerendes an der Stütze wird über einen Bolzen samt Unterlegscheibe und Mutter bewerkstelligt. Zwischen dem Längslenkerende und der Stütze befindet sich eine Exzenterscheibe mit mehreren Löchern. Dabei wird eine zentrale, ovale Lochöffnung vom besagten Bolzen durchgriffen. Dieser steht weiterhin mit den Öffnungen der Stütze und des Längslenkers im Eingriff. Die Exzenterscheibe überragt soweit die Seitenwand der Stütze, dass die Exzenterscheibe über ein in zwei Löcher zugleich eingreifendes Werkzeug ergreifbar und verdrehbar ist, wodurch mittelbar eine Längsverschiebung des Längslenkers erfolgt. Die Spureinstellung eines Achslenkers über eine solche Exzenterscheiben-Anordnung geht mit einem erhöhten Konstruktions-, Montage- und Kostenaufwand einher.

Eine ähnliche Justiereinrichtung zur Spureinstellung ist in der US 2008/0036167 A1 gezeigt.

Zur Justierung steht der Bolzen auf der Außenseite der Stütze mit zwei Unterlegscheiben in Kontakt. Die Unterlegscheibe besitzt jeweils einen erweiterten oberen Teilbereich und einen schmaleren unteren Teilbereich. Durch Angriff eines Betätigungswerkzeugs in eine Sechskant-Öffnung am unteren Teilbereich der Scheibe kann diese rotiert werden und der Längslenker samt Bolzen wird somit in Fahrzeugrichtung verschoben. Auch bei dieser Anordnung zur Spureinstellung ist es von Nachteil, dass mit der Unterlegscheibe ein zusätzliches Bauteil zum Verschieben des Achslenkers benötigt wird. Dies führt ebenfalls zu einem erhöhten Konstruktions-, Montage-, Wartungs- und Kostenaufwand.

Während das Dokument DE 196 03 612 A1 eine Lenkeranordnung entsprechend der Oberbegriffe der unabhängigen Ansprüche 1 und 14 aufzeigt, offenbaren die Dokumente DE 10 2007 032 242 A1 und EP 1 383 672 B1 weitere ähnliche Lenkeranordnungen.

Der Erfindung liegt die Aufgabe zu Grunde, eine Lenkeranordnung für ein Fahrzeug mit mindestens einem sich in Fahrzeuglängsrichtung erstreckenden Achslenker zu schaffen, die selbst bei einem einfachen, wenige Bauteile erfordernden Aufbau eine präzise Spureinstellung erlaubt, und zugleich materialschonend ist.

Zur Lösung dieser Aufgabe wird eine Lenkeranordnung für ein Fahrzeug mit den in Patentanspruch 1 angegebenen Merkmalen, sowie ein Verfahren zum stufenlosen Verschieben eines Achslenkers mit den Merkmalen des Patentanspruchs 14 vorgeschlagen.

Bei einer solchen erfindungsgemäßen Lenkeranordnung ist der Achslenker an einer chassisfesten Stütze über einen Gelenkbolzen schwenkbar gelagert. Der Gelenkbolzen führt dabei durch eine Öffnung im Achslenker sowie Öffnungen in den Seitenwänden der Stütze hindurch und ist mit einer Mutter gesichert. Der Bolzen, die Mutter, die an der Stütze befindliche Öffnung und eine mit Öffnungen versehene Unterlegescheibe bilden Positioniermittel zum Fixieren der Längsposition des Achslenkers. Weiterhin trägt der Achslenker einen quer zur Fahrzeuglängsrichtung verlaufenden Achskörper, eine Federung und gegebenenfalls Stoßdämpfer.

Die Spureinstellung beziehungsweise die Verschiebung des Achslenkers in Fahrzeuglängsrichtung erfolgt über Verstellmittel. Diese bestehen einerseits aus mindestens einer Angriffsfläche für ein Hebelwerkzeug am Achslenker oder einem achslenkerfesten Bauteil, und andererseits aus mindestens einer chassisfesten Abstützfläche. Die zwei Flächen sind so angeordnet, dass an beide zugleich das Hebelwerkzeug anlegbar ist, um so eine Verschiebekraft in Fahrzeuglängsrichtung aufzubringen.

Die Angriffsfläche befindet sich an einer in den Achslenker eingelassenen Ausnehmung.

Auch kann die Angriffsfläche durch einstückig an den Achslenker angeformte Ansätze oder fest mit dem Achslenker verbundene Bauteile gebildet werden.

Die chassisfeste Abstützfläche ist bevorzugt direkt an der Stütze ausgebildet. Da die Verstellmittel direkte Bestandteile des Achslenkers respektive der Stütze sind, ist es nicht notwendig, separate Bauteile allein für die Spureinstellung zu montieren. Dadurch werden unnötige Arbeitsschritte umgangen und Bauteil- und Arbeitskosten eingespart. Die genannten Verstellmittel lassen sich beispielsweise in den ohnehin erforderlichen Fertigungsschritten bei der Herstellung des Achslenkers bzw. beim Umformen oder Prägen der Stütze erzeugen.

Damit mittels Hebelwerkzeug gleichzeitig an einer der Angriffsflächen an dem Achslenker oder einem achslenkerfesten Bauteil und einer Abstützfläche an der Stütze angegriffen werden kann und bei Aufwendung einer Hebelkraft eine Längsverschiebung des Achslenkers wahlweise in jede der beiden Richtungen der Fahrzeuglängsachse bewirkt werden kann, ist die Angriffsfläche und vorzugsweise die Abstützfläche derart auszugestalten, dass diese zweigeteilt sind und sie sich jeweils aus einer ersten Teilfläche und einer zweiten Teilfläche zusammensetzen. Die Teilflächen sind dabei in Fahrzeuglängsrichtung gerichtet, weisen jedoch in einander entgegengesetzte Richtungen. Dies kann vorteilhaft für eine möglichst kraftsparende manuelle Spureinstellung bei günstigem Hebelarm sein.

Die beiden Teilflächen der Angriffsfläche können einander abgewandt sein. Die einander abgewandten Teilflächen der Angriffsfläche können beispielsweise durch eine Ausnehmung am Achslenker ausgebildet sein. Dies ist insbesondere vorteilhaft für eine kostengünstige Fertigung, denn solche Ausnehmungen können im Gießvorgang des Achslenkers ausdefiniert werden.

Zur Spureinstellung stützt sich das Hebelwerkzeug zum einen an einer Teilfläche der Angriffsfläche und zum anderen auch an einer Teilfläche der Abstützfläche ab. Bei einer Ausgestaltung der Angriffsfläche mit einander abgewandten Teilflächen, liegt das Hebelwerkzeug an einer Teilfläche der Abstützfläche an, welche in die entgegengesetzte Richtung der Teilfläche der Angriffsfläche weist. Jedoch sind die beiden Teilflächen der Abstützfläche in diesem Fall einander zugewandt.

In einer weiteren Ausgestaltung der Erfindung können die beiden Teilflächen der Angriffsfläche auch einander zugewandt sein. Eine solche Angriffsfläche kann eine Ausnehmung, ein Ansatz, oder ein an dem Achslenker angeformter oder befestigter Haken sein. Bei dieser Ausgestaltung stützt sich das Hebelwerkzeug ebenfalls an einer Teilfläche der Angriffsfläche und an einer Teilfläche der Abstützfläche ab. Die in Kontakt zum Hebel stehenden Teilflächen stehen diagonal zueinander. Demnach sind auch die Teilflächen der Abstützfläche einander zugewandt.

Durch Aufwendung einer Hebelkraft kann der Achslenker entlang der Fahrzeuglängsachse sowohl nach vorne als auch nach hinten manövriert werden. Dabei wirken die durch Hebeln erzeugten Kräfte an der Angriffsfläche und der Abstützfläche in entgegengesetzter Richtung.

Es ist diesbezüglich weiterhin vorteilhaft, wenn die Angriffsfläche und die Abstützfläche quer zur Fahrzeuglängsrichtung einen Abstand von 1 cm bis 5 cm aufweisen. Hierdurch wird unter Verwendung eines nicht zu großen und daher für den Monteur noch gut handhabbaren Hebelwerkzeugs eine Verschiebung des Achslenkers in zwei Richtungen ermöglicht.

Entgegen dem Stand der Technik ist es nicht notwendig, zusätzliche Bauteile in die Konstruktion aufzunehmen, woraus eine gesteigerte Robustheit und verringerte Materialabnutzung bei der Spureinstellung resultiert. Dadurch, dass die Angriffsfläche und die Abstützfläche jeweils aus nur zwei Teilflächen bestehen, ist die Konstruktion im Vergleich zu Justierscheiben- oder Exzenteranordnungen deutlich vereinfacht.

Erfindungsgemäß ist die Angriffsfläche in Form einer Ausnehmung am Achslenker ausgestaltet. Dabei kann eine solche Ausnehmung nahezu jedwede Form besitzen, solange sie zwei Teilflächen aufweist. Auch die Außenseite einer Ausnehmung kann als Teilfläche der Angriffsfläche dienen. Die Teilflächen der Angriffsfläche müssen folglich nicht zwingend innerhalb der Ausnehmung liegen.

Besonders vorteilhaft ist es, wenn die Ausnehmung eine kantenförmige oder zumindest teilkreisförmige Kontur besitzt. Eine solche Kontur erlaubt die eindeutige Unterteilung der Angriffsfläche in zwei Teilflächen. Dadurch wird die erfindungsgemäße Konstruktion im Vergleich zu aus dem Stand der Technik bekannten Exzenter-, Schraub- oder Klemmanordnungen vereinfacht. Eine solche Ausnehmung kann in einem ohnehin erforderlichen Herstellungsschritt, etwa beim Gießen des Achslenkers geformt werden, oder aber auch in einem späteren Verfahrensschritt durch Fräsen oder Bohren.

Es ist weiterhin möglich lediglich Ausnehmungen in einer von einem Bolzen durchdrungenen, mit einer Mutter fest verspannten Unterlegscheibe vorzusehen. Solche Ausnehmungen können ebenfalls Angriffsfläche für ein Hebelwerkzeug sein. Die dazu korrespondierende Abstützfläche für das Hebelwerkzeug ist bevorzugt eine Ausnehmung in der Stütze.

Die Angriffsfläche kann nicht erfindungsgemäß ebenso von einem Ansatz in Form eines an den Achslenker beim Gießen angeformten Vorsprunges ausgebildet werden. Auch am Achslenker vorhandene Bolzen oder Muttern können die Angriffsfläche formen. Es ist von Vorteil, wenn ein solcher Ansatz in Richtung der Stütze weist. Es können vorzugsweise ein oder mehrere solcher Vorsprünge, Bolzen oder Muttern in unmittelbarer Nähe zueinander liegen und somit zwei Teilflächen ausbilden. Es ist vorstellbar, dass es sich bei den genannten Vorsprüngen, Bolzen oder Muttern um bereits am Achslenker vorhandene Bauteile mit Befestigungs- oder Spannfunktion handelt. So werden bereits vorhandene Bauelemente für die Spureinstellung zur Bereitstellung der Verstellmittel genutzt. Dadurch können Kosten und zusätzlicher Montageaufwand reduziert werden.

In einer weiteren nicht erfindungsgemäßen Variante kann die Angriffsfläche auch durch einen am Achslenker angeordneten Haken ausgebildet werden. Dabei wird der Haken entweder beim Gießen des Achslenkers geformt oder aber in einem späteren Verfahrensschritt an dem Achslenker befestigt, beispielsweise durch Schweißen, Nieten, Klemmen oder Schrauben. Es ist von Vorteil den Haken als den Achslenker in Fahrtrichtung verlängernden Fortsatz auszubilden. Der Haken bildet von seiner Unterseite eine teilkreisförmige oder teilbogenförmige Öffnung. An dieser Öffnung befindet sich die Angriffsfläche zur Anlage des Hebelwerkzeugs. Die teilkreisförmige oder teilbogenförmige Öffnung besitzt eine Umfangserstreckung der Angriffsfläche von mindestens 180°. Dadurch wird erzielt, dass bei jeder Anlageposition des Hebelwerkzeugs an einer Teilfläche der Angriffsfläche, dieser Teilfläche eine andere Teilfläche der Angriffsfläche zugewandt ist. Die Verwendung eines solchen Hakens als Bestandteil der Verstellmittel ist vorteilhaft, da er durch seine Anordnung am Achslenker innerhalb des Stützgehäuses einen gewissen Schutz vor äußeren Einflüssen erfährt.

Der im Bereich der Stütze angeordnete Haken zeichnet sich in einer nicht erfindungsgemäßen Variante dadurch aus, dass er eine geringere Breite als der übrige Achslenker aufweist. Hierdurch wird eine unnötige Verbreiterung der Lenkeranordnung durch für die Spureinstellung benötigte Verstellmittel vermieden. Durch die geringere Breite des Hakens ist auch der Abstand zur Stütze erhöht, wodurch Schädigungen an der Stütze, wie etwa bei Abrutschen des Hebelwerkzeugs, vermieden werden.

Zudem bietet sich die Möglichkeit, an einem solchen Haken weitere Fahrzeugteile zu befestigen. So kann etwa an den Hakenaußenseiten oder der Oberseite ein Stoßdämpfer oder ein Achslift gelenkig befestigt werden. In einer solchen Ausführungsform ist der Stoßdämpfer oder der Achslift durch die Seitenwände der Stütze vor äußeren Einflüssen wie etwa Spritzwasser, Streusalz und anderen Verunreinigungen geschützt.

Die chassisfeste Abstützfläche ist vorzugsweise als Ausnehmung oder als Ansatz an der Stütze ausgeführt. Dabei kann sowohl die Ausnehmung als auch der Ansatz entweder an einer der Seitenwände der Stütze oder aber an der Vorderwand ausgebildet sein. Insbesondere eine Anordnung an der Seitenwand hat sich als besonders praktikabel herausgestellt. Da die Ausnehmung oder der Ansatz bevorzugt aus dem Material der Stütze geformt werden, wird die Verwendung zusätzlicher Bauteile vermieden, und somit Kosten- und Montageaufwand eingespart. Zudem wird die Spureinstellung aufgrund der nicht notwendigen Montage zusätzlicher Bauteile vereinfacht.

Die Ausnehmung an der Stütze kann entweder eine kantenförmige oder eine zumindest teilweise abgerundete Kontur besitzen. Eine kantenförmige Kontur kann hierbei bedeuten, dass es sich um eine trigonale, tetragonale oder pentagonale Kontur handelt. Bevorzugt ist es, wenn die Ausnehmung eine kreisförmige oder eine halbkreisförmige Kontur hat, wobei die Ausführungsform mit einer Ausnehmung von kreisförmiger Kontur besonders bevorzugt ist. Dies kann beispielsweise in einem Stanz- oder Bohrvorgang umgesetzt werden. Die Abstützfläche kann also bereits während der Herstellung oder auch nachträglich ausgebildet werden.

In einer weiteren nicht erfindungsgemäßen Ausgestaltung kann der Ansatz an der Stütze ein durch Prägen des Stützblechs geformter Vorsprung oder aber ein schon am Stützblech vorhandener Bolzen sowie eine Mutter sein. Besonders bevorzugt ist es, wenn sich mehrere solcher Ansätze gegenüberliegen, um zwei einander zugewandte Teilflächen der Abstützfläche auszubilden. Durch die Verwendung schon vorhandener Fahrzeugteile als Abstützfläche wird sowohl der Montage- und Kostenaufwand reduziert, als auch die Spureinstellung deutlich vereinfacht. Die sich an der Stütze befindenden Positioniermittel und Verstellmittel können beabstandet zueinander angeordnet sein. Dabei kann sich die Ausnehmung oder der Ansatz an der Stütze auf umfänglich beliebigen Positionen relativ zum Positioniermittel befinden. Von Vorteil ist es, wenn die Ausnehmung an der Stütze in Fahrzeuglängsrichtung ungefähr gegenüber der Ausnehmung am Achslenker liegt. Da die Positionier- und Verstellmittel voneinander beabstandet sind, wird beim Verschieben des Achslenkers durch Anlegen eines Hebelwerkzeugs an den Verstellmitteln die Beschädigungsgefahr an den Positioniermitteln minimiert. Positionier- und Verstellmittel können sowohl an der inneren Seitenwand, als auch an der äußeren Seitenwand der Stütze angebracht werden. Die innere Seitenwand der Stütze ist näher zur Fahrzeugmitte angeordnet als die äußere Seitenwand der Stütze.

Auch eine Anordnung an der Stützenvorderseite ist möglich. Dadurch entsteht eine deutlich erhöhte Variabilität bei der Fertigung und Montage des Achslenkers an der chassisfesten Stütze. Die Spureinstellung kann je nach Konstruktion bzw. Bedarf flexibel gestaltet werden. Aus dem Stand der Technik sind als Positioniermittel den Bolzen an der Stütze festlegende Muttern samt Unterlegscheiben und Spureinstellplatten mit mindestens einer Öffnung bekannt. Um Bauteilkosten zu einzusparen ist es vorteilhaft, wenn lediglich eine runde Unterlegscheibe und keine Spureinstellplatte verwendet wird. Dadurch wird der Befestigungsmechanismus des Bolzens vereinfacht.

Die Unterlegscheibe kann, beabstandet zum Bolzen, mit einer Ausnehmung versehen sein.

Diese bildet die Teilflächen einer Angriffsfläche für das Hebelwerkzeug aus. Durch die feste Verspannung mit dem Achslenker ist es möglich, mit einem Hebelwerkzeug, das zeitgleich an einer Abstützfläche, in diesem Fall eine Teilfläche einer Ausnehmung in der chassisfesten Stütze angreift, den Achslenker in Fahrzeuglängsrichtung zu verschieben.

Weitere Einzelheiten und Vorteile der Erfindung ergeben sich aus der nachfolgenden Beschreibung der zugehörigen Zeichnungen, in denen Ausführungsbeispiele der erfindungsgemäßen Lenkeranordnung und des Verfahrens zum stufenlosen Verschieben eines Achslenkers dargestellt sind. In den Zeichnungen zeigen:
- Fig. 1: eine perspektivische Darstellung eines Längslenkers, insbesondere eines an einer Stütze schwenkbar gelagerten Achslenkers, wie im Prinzip aus dem Stand der Technik bekannt;
- Fig. 2: in perspektivischer Darstellung nur die Stütze nach einer ersten Ausführungsform der Erfindung;
- Fig. 3: in perspektivischer Darstellung die Stütze nach Fig. 2 einschließlich Positioniermitteln zum Fixieren des Achslenkers relativ zur Stütze;
- Fig. 4: eine schematische Darstellung der Lenkeranordnung nach einer ersten Ausführungsform der Erfindung mit einem angesetzten Hebelwerkzeug in einem Horizontalschnitt im Bereich der Stütze;
- Fig. 5: eine schematische Darstellung der Lenkeranordnung nach Fig. 4 mit dem Hebelwerkzeug im Fall einer zweiten Hebelrichtung;
- Fig. 6: eine schematische Darstellung der Lenkeranordnung nach Fig. 4 mit dem Hebelwerkzeug in einer alternativen Angriffsposition;
- Fig. 7: eine schematische Darstellung der Lenkeranordnung mit Hebelwerkzeug in einem Horizontalschnitt in einer weiteren Ausführungsform der Erfindung;
- Fig. 8: eine schematische Darstellung der Lenkeranordnung nach Fig. 7 mit dem Hebelwerkzeug im Fall einer zweiten Hebelrichtung;
- Fig. 9: eine schematische Darstellung der Lenkeranordnung mit Hebelwerkzeug in einem Horizontalschnitt in einem nicht erfindungsgemäßen Beispiel;

- Fig. 10: eine schematische Darstellung der Lenkeranordnung nach Fig. 9 mit dem Hebelwerkzeug im Fall einer zweiten Hebelrichtung;
- Fig. 11: eine schematische Darstellung einer Unterlegscheibe für die Lenkeranordnung der Ausführungsform nach Fig. 9 und 10;
- Fig. 12: eine schematische Darstellung einer alternativen Ausgestaltung einer Unterlegscheibe für die Lenkeranordnung der Ausführungsform nach Fig. 9 und 10;
- Fig. 13: eine schematische Darstellung einer alternativen Ausgestaltung einer Unterlegscheibe für die Lenkeranordnung der Ausführungsform nach Fig. 9 und 10;
- Fig. 14: eine schematische Darstellung einer Innenseite der Seitenfläche der Stütze in einer weiteren Ausführungsform der Erfindung;
- Fig. 15: der vordere Teil eines Achslenkers in einer Seitenansicht nach dem Stand der Technik;
- Fig. 16: die Seitenansicht des vorderen Teils eines Achslenkers in einer vierten Ausführungsform der Erfindung.

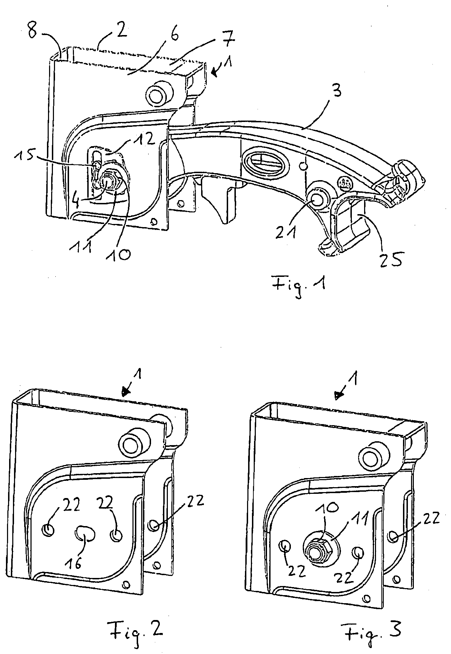

Auf der Unterseite des Fahrzeugrahmens eines Lkw-Anhängers oder -Aufliegers sind jeweils auf der linken und der rechten Fahrzeugseite Lenkeranordnungen an Stützen 1 chassisfest montiert, wobei die Oberseite 2 der Stütze 1 vorzugsweise am Längsträger des Fahrzeugrahmens angeschweißt ist. Wie aus Figur 1 ersichtlich wird, lagert die Stütze 1 einen Achslenker 3 schwenkbar an einem Bolzen 4.

Der Bolzen 4 ist durch eine quer zur Fahrzeuglängsachse L verlaufende Durchgangsöffnung 5 am Achslenker 3 und durch Öffnungen in den jeweils zwei Seitenwänden 6, 7 der Stütze geführt. Weiterhin ist der mit einem Gewinde versehene Bolzen 4 an der Seitenwand 6 der Stütze 1 über eine Mutter 10 samt Unterlegscheibe 11 fixiert.

Die erfindungsgemäße Stütze 1 setzt sich aus zwei Seitenwänden 6, 7 und einer die Seitenwände 6, 7 verbindenden Vorderwand 8 zusammen. Eine Seitenwand 7 liegt quer zur Fahrzeuglängsrichtung weiter im Fahrzeuginneren als die andere Seitenwand 6. Aus dem Stand der Technik sind Stützen 1 bekannt, die neben der den Bolzen 4 durch die Stützseitenwand 6 führenden Öffnung 16 einen Materialvorsprung 15 besitzen, der zur vertikalen Führung einer Spureinstellplatte 12 dient. In der aus dem Stand der Technik bekannten Ausführungsform der Lenkeranordnung nach Fig. 1 wird durch einen Schlag von oben oder unten auf die Spureinstellplatte 12 eine Verschiebung des Achslenkers 3 in Fahrzeuglängsrichtung erreicht. Der Bolzen 4 ist dabei durch ein an der Stütze 1 befindliches und ein an der Spureinstellplatte 12 befindliches Langloch geführt. Die Längsachsen der beiden Langlöcher stehen quer zueinander.

Der Achslenker 3 ist z. B. einstückig in einem Gussverfahren hergestellt, während die Stütze 1 aus Blech geformt ist. Wie in Figur 1 gezeigt, sind aus dem Stand der Technik Materialvorsprünge 15 an der Stütze 1 zur Führung der Spureinstellplatten 12 bekannt.

Der Achslenker 3 kann an seinem der Stütze 1 abgewandten, hinteren Ende eine Halbschale 25 aufweisen, um einen quer zur Fahrzeuglängsachse L sich erstreckenden Achskörper (nicht dargestellt) einer Fahrzeugachse aufzunehmen. Ferner besitzt der Achslenker 3 in unmittelbarer Nähe der Halbschale 25 einen Ansatz 21 für einen Stoßdämpfer.

Wie Figur 2 in einer ersten Ausführungsform der Erfindung zeigt, befindet sich neben der den Bolzen 4 führenden, langlochförmigen Öffnung 16 der Stütze 1 mindestens eine weitere Ausnehmung bzw. Öffnung 22 in der Seitenwand 6 der Stütze 1. Durch diese Öffnung 22 hindurch kann mit einem Hebelwerkzeug 20 in den inneren Stützenbereich eingegriffen werden. Die Öffnung 22 kann an beliebigen Positionen relativ zu der den Bolzen 4 führenden Öffnung 16 liegen, solange beide Öffnungen 16,22 voneinander beabstandet sind. Der durch die Öffnung 16 bzw. das Langloch hindurchgeführte Bolzen 4 ist, wie Fig. 3 zeigt, mit einer Unterlegscheibe 11 und einer Mutter 10 an der Seitenwand 6 der Stütze 1 festgespannt.

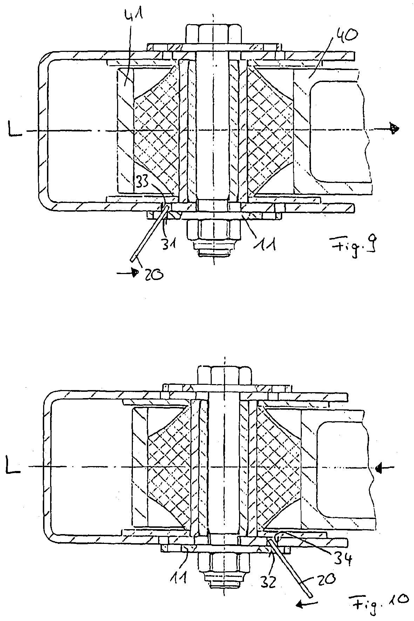

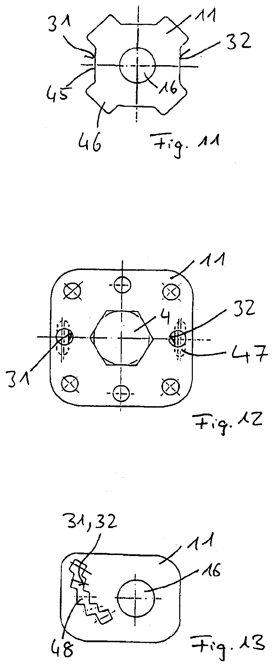

Die Unterlegscheibe 11 kann dabei runder, quadratischer oder rechteckiger Querschnittskontur sein. Die Figuren 11, 12 und 13 zeigen optionale Formen von Unterlegscheiben, die ein Hindurchgreifen eines Hebelwerkzeugs durch die Unterlegscheibe 11 erlauben. Wie aus den Figuren 9 und 10 ersichtlich, greift ein Hebelwerkzeug 20 in diesem Fall in Ausnehmungen 22 der Stütze ein. In dieser Ausführungsform bilden die Ausnehmungen der Unterlegscheibe 11 eine Angriffsfläche 31, 32 für das Hebelwerkzeug 20.

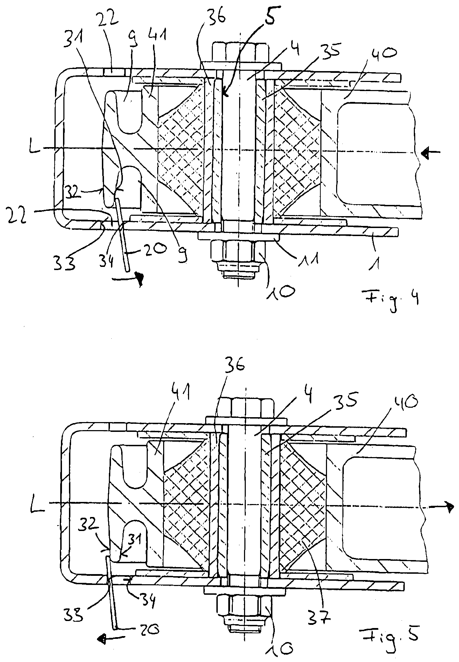

Gemäß der ersten Ausführungsform (Fig. 4) der Erfindung ist zusätzlich zu der Öffnung 22 in der Stützseitenwand 6 auch eine Ausnehmung 9 am Achslenker 3 vorhanden. In dieser Ausführungsform ist die Öffnung 22 in der Stütze 1 und die Ausnehmung 9 im Achslenker 3, bezogen auf die Fahrzeuglängsachse L, beabstandet neben dem Bolzen 4 angeordnet. Die Ausnehmungen 9, 22 können im Bereich des hinteren Achslenkerabschnitts 40 oder des vorderen Achslenkerabschnitts 41 ausgebildet sein.

Die Ausnehmung 9 am Achslenker 3 bildet eine zweigeteilte Angriffsfläche 31, 32 für das Hebelwerkzeug 20. Diese Angriffsfläche 31,32 ist in eine erste Teilfläche 31 und eine zweite Teilfläche 32 unterteilt, wobei beide Teilflächen 31, 32 in Fahrzeuglängsrichtung gerichtet sind, jedoch in einander entgegengesetzte Richtungen weisen. Eine Teilfläche 32 der Angriffsfläche 31, 32 wird in dieser Ausführungsform von der Stirnfläche 38 des Achslenkers 3 ausgebildet, während die andere Teilfläche 31 von einer Innenfläche der Ausnehmung am Achslenker 3 gebildet wird. Die Öffnung 22 im Bereich der Seitenwand 6 der Stütze 1 bildet die Abstützfläche 33, 34 für das Hebelwerkzeug. Diese Abstützfläche 33, 34 hat zwei einander zugewandte Teilflächen 33 und 34.

Bei Anlage des Hebelwerkzeugs 20 zugleich an der einen Teilfläche 34 der Abstützfläche und der einen Teilfläche 31 der Angriffsfläche, und sodann einer Kraft in Richtung der Fahrzeugrückseite durch kraftausübendes Verschwenken des Hebelwerkzeugs 20 lässt sich der Achslenker 3, gemäß Pfeilrichtung in Fig. 4, in Richtung zur Fahrzeugvorderseite verschieben, womit auch die Fahrzeugachse zur Spureinstellung entsprechend verschoben wird. Dabei muss sich der Bolzen 4 im ungespannten Zustand befinden.

Bei dieser Ausführungsform liegt das Hebelwerkzeug 20 an einer Innenfläche der Ausnehmung 9 am Achslenker 3 an, wobei die Ausnehmung die Funktion einer ersten Teilfläche 31 der Angriffsfläche 31, 32 hat. Die die Abstützfläche bildende Öffnung 22 in der Stütze, kann gemäß der ersten Ausführungsform der Erfindung an beiden Seitenwänden 6, 7 der Stütze 1, oder auch nur an einer der beiden Seitenwänden 6, 7 ausgebildet sein. Auch ein Eingriff mit dem Hebelwerkzeug 20 durch die Unterseite der Stütze 1 ist möglich.

Wie aus Figur 5 ersichtlich wird, verschiebt sich der Achslenker 3 bei gleichzeitiger Anlage des Hebelwerkzeugs 20 an der ersten Teilfläche 33 der Abstützfläche 33, 34 und der zweiten Teilfläche 32 der Angriffsfläche 31, 32 und Hebeln gemäß Pfeilrichtung in Richtung des Fahrzeugendes. Die zweite Teilfläche 32 der Angriffsfläche 31, 32 ist in dieser Ausführungsform die Stirnfläche 38 des Achslenkers 3.

Der Bolzen 4 ist von einer zylindrischen Stahlgummibuchse umgeben, wobei sich diese ausgehend vom Bolzen von innen nach außen aus einem Distanzstück 35, einer Stahlbuchse 36 und einem Gummiring 37 zusammensetzt. Der Achslenker 3 kann in einen hinter der Stahlgummibuchse gelegenen hinteren Achslenkerabschnitt 40 und einen vor der Stahlgummibuchse gelegenen vorderen Achslenkerabschnitt 41 unterteilt werden, wobei der vordere Abschnitt 41 und der hintere Abschnitt 40 ein einstückiges Bauteil sind. Die Stahlgummibuchse verläuft innerhalb einer den Achslenker 3 durchdringenden Öffnung.

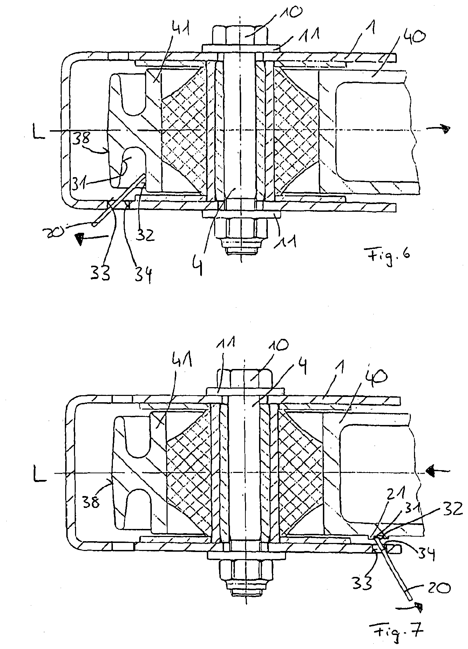

In einer zweiten Ausführungsform wird die zweigeteilte Angriffsfläche 31, 32 durch beide Innenflächen der Ausnehmung 9 im Achslenker 3 gebildet. Zum Manövrieren des Achslenkers 3 in Fahrzeuglängsrichtung liegt das Hebelwerkzeug 20 gemäß Figur 4 an der ersten Teilfläche 31 der Angriffsfläche und an der zweiten Teilfläche 34 der Abstützfläche an. Die Hebel- und Bewegungsrichtung ist durch Pfeile kenntlich gemacht. Neben Figur 4 wird diese zweite Ausführungsform auch durch Figur 6 wiedergegeben. Dort ist die Anlageposition und die Hebelrichtung des Hebelwerkzeugs 20 den in Figur 4 dargestellten Anlagepositionen entgegensetzt. Gemäß Pfeilrichtung wird der Achslenker in Richtung der Fahrzeugrückseite bewegt. Auch in dieser Ausführungsform kann das Hebelwerkzeug 20 die Stütze 1 von beiden Seitenwänden 6, 7 durchgreifen.

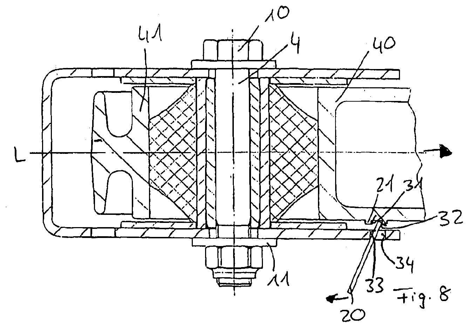

Nach einer dritten Ausführungsform (Figuren 7 und 8) lässt sich die Angriffsfläche 31, 32 auch durch der Stütze 1 zugewandte Ansätze 21 wie Vorsprünge, Muttern oder Bolzen realisieren. Hierbei ist es einzig von Relevanz, dass sich zwei Teilflächen 31,32 der Ansätze von der Materialoberfläche des Achslenkers 3 in Richtung zu der Stütze 1 hin abheben, und dass die Teilflächen 31, 32 einander zugewandt sind. Solche Ansätze 21 können sich sowohl linksseitig als auch rechtsseitig des Bolzens 4 am Achslenker 3 befinden. In Figur 7 sind die Ansätze 21 am hinteren Achslenkerabschnitt 40 befindlich, können sich aber wie bereits erwähnt auch am vorderen Achslenkerabschnitt 41 befinden.

Auch bei dieser Ausführungsform kann, wie in Figur 7 und 8 gezeigt, ein von außen angesetztes Hebelwerkzeug 20 an einer Teilfläche der Angriffsfläche 31, 32 und einer Teilfläche der Abstützfläche 33, 34 angreifen und den Achslenker 3 mit den in Fig. 7 und 8 gekennzeichneten Hebelrichtungen entlang der Fahrzeuglängsrichtung nach vorne oder hinten verschieben.

Der Hauptkraftfluss an der Handhabe des Hebelwerkzeugs 20 und die Bewegungsrichtung des Achslenkers 3 sind in den ersten Ausführungsformen entgegengesetzt. Die Ansätze 21 am Achslenker 3 können auf beiden Seiten oder auf nur einer Seite des Achslenkers 3 ausgebildet sein. Gleiches gilt für die Ausnehmungen in der Stütze 1.

In einem nicht erfindungsgemäßen Beispiel befindet sich die Angriffsfläche 31, 32 für das Hebelwerkzeug 20 nicht wie in den zuvor beschriebenen Ausführungsbeispielen am Achslenker 3. Die Angriffsfläche 31, 32 befindet sich in einer Ausnehmung der Unterlegscheibe 11. Diese kann gemäß der in den Fig. 11, 12 und 13 gezeigten Varianten mehrere Ausnehmungen zur Ausbildung der Angriffsfläche 31, 32 enthalten. Durch die Ausgestaltung gleich mehrerer Ausnehmungen in der Unterlegscheibe, bevorzugt links- und rechtsseitig des Bolzens 4, wird ein in der Summe größerer Verstellbereich verglichen mit den anderen Ausführungsformen erreicht. Die Spureinstellung ist also über einen größeren Bereich entlang der Fahrzeuglängsachse möglich.

Wie in Fig. 9 ersichtlich, greift das Hebelwerkzeug durch eine Ausnehmung der Unterlegscheibe 11 in eine Ausnehmung 22 in der Stütze 1 ein. Die Ausnehmung in der Stütze 1 bildet eine Teilfläche 33 der chassisfesten Abstützfläche 33, 34, und kann die Form eines Langlochs 47 haben. Um den Achslenker nach hinten, in Richtung der Fahrzeugrückseite zu manövrieren, liegt das Hebelwerkzeug 20 an der ersten Teilfläche 31 der Angriffsfläche 31, 32 an. Die Unterlegscheibe 11 wird samt Bolzen 4 und Achslenker 3 relativ zu der Stütze 1 nach hinten verschoben.

In diesem Beispiel befindet sich die zweite Teilfläche 32 der Angriffsfläche gemäß Fig. 10 in einer zweiten Ausnehmung der Unterlegscheibe, rechtsseitig des Bolzens 4. Dies kann auch durch Drehen einer Unterlegscheibe 11 mit nur einer Ausnehmung bewirkt werden, wie etwa einer Unterlegscheibe nach Fig. 13. Die zweite Teilfläche 34 der Abstützfläche 33, 34 befindet sich in einer weiteren Ausnehmung 22 der Stütze 1. Bei Hebeln gemäß Pfeilrichtung in Fig. 10 würde der Achslenker 3 relativ zur chassis- und positionsfesten Stütze 1 in Richtung der Fahrzeugvorderseite bewegt. Die Ausnehmungen in der Unterlegscheibe 11 und der Stütze 1 können an beiden Seiten des Achslenkers 3 ausgebildet sein, genauer an beiden Seitenwänden 6, 7 der Stütze 1.

Das Beispiel nach Fig. 9 und 10 bedingt neben der Öffnung 16 für den Bolzen 4 mindestens zwei weitere Öffnungen oder Aussparungen in der Unterlegscheibe 11. Die Figur 11 zeigt eine Variante einer Unterlegscheibe 11, bei welcher die Unterlegscheibe 11 in der Mitte eine Öffnung 16 besitzt, welche der Bolzen 4 bei Befestigung durchdringt. Die Außenkontur der Unterlegscheibe 11 ist im Querschnitt zickzackartig. Umfänglich wechseln sich aneinandergereiht Ausnehmungen 45 und Vorsprünge 46 ab. Die Angriffsfläche 31, 32 ist eine der durch eine Ausnehmung 45 gebildeten Seitenflächen. Bei einer solchen Ausgestaltung der Unterlegscheibe kann das Hebelwerkzeug 20 an gleich zwei Seiten der Unterlegscheibe 11 angreifen. Wie aus den Fig. 9, 10 und 11 ersichtlich, wird dadurch ein größerer Verstellbereich bei der Spureinstellung zugänglich.

Nach Fig. 12 ist es auch möglich eine quadratische Unterlegscheibe 11 mit abgerundeten Ecken zu verwenden. Links- und rechtsseitig des die Unterlegscheibe 11 im Zentrum durchdringenden Bolzens 4 befinden sich Öffnungen, durch welche das Hebelwerkzeug 20 hindurchgreifen kann. Durch die Ausgestaltung der Öffnungen 22 in der Stütze als vertikales Langloch 47 wird ein vertikales Abwinkeln des Hebelwerkzeugs 20 ermöglicht.

Ähnliches kann mit einer Unterlegscheibe nach Fig. 13 erreicht werden. Dort befindet sich seitlich einer Hauptöffnung 16 der Unterlegscheibe 11 ein Lochraster 48, welches ein Ansetzen des Hebelwerkzeugs 20 in verschiedenen Vertikalpositionen erlaubt. Aufgrund der zusätzlichen Horizontalerstreckung des Lochrasters 48 kann das Hebelwerkzeug 20 auch verschiedene Horizontallagen einnehmen. Im ungespannten Zustand kann die Unterlegscheibe um 180° gedreht werden und erlaubt somit den Eingriff in eine zweite Öffnung in der Stütze 1.

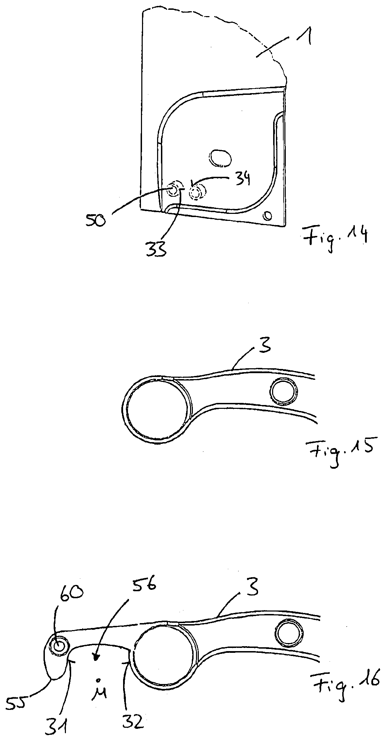

In einer weiteren Ausführungsform der Erfindung gemäß Fig. 14 kann die Abstützfläche 33, 34 auch durch Vorsprünge 50 an der Stütze 1, welche in Richtung des Achslenkers 3 vorstehen, ausgebildet werden. Dabei müssen die Vorsprünge 50 zwei Teilflächen 33, 34 der Abstützfläche 33, 34 ausbilden, die es einem Hebelwerkzeug 20 erlauben, entweder an der ersten 33 oder der zweiten 34 der einander zugewandten Teilflächen 33, 34 der Abstützfläche 33, 34 anzuliegen. In der Ausführungsform nach Figur 14 greift das Hebelwerkzeug 20 nicht wie in den zuvor beschriebenen Ausführungsformen von der Seite durch die Stütze 1 hindurch, sondern kontaktiert die erste Teilflächen 33 oder zweite Teilfläche 34 der Abstützfläche 33,34 von unten.

In dieser Ausführungsform kann die Angriffsfläche 31,32 am Achslenker 3 durch Ansätze wie Vorsprünge, Muttern, Bolzen oder Ausnehmungen zuvor gezeigten Ausführungsformen realisiert werden. Entscheidend ist die Anbringung der Abstützfläche 33, 34 an der Innenseite der Seitenwand 6, 7 der Stütze 1. Bei Spureinstellung liegt das Hebelwerkzeug 20 an einer der Angriffsflächen 31,32 der Ansätze oder Ausnehmungen an. Des Weiteren stützt sich das Hebelwerkzeug 20 an einer der Abstützflächen 33, 34 an der Innenseite der Stütze 1 ab. Je nach Richtung des Hebelwerkzeugs 20, wird der Achslenker 3 entlang der Fahrzeuglängsrichtung nach vorne oder hinten bewegt.

Es ist weiterhin möglich, einen aus dem Stand der Technik bekannten Achslenker 3, wie in Fig. 15 gezeigt, so auszubilden, dass die Angriffsfläche 31, 32 für das Hebelwerkzeug 20 die Form eines Hakens 55 hat (Fig. 16). Ein solcher Haken 55 ist erfindungsgemäß einstückig durch Gießen an das vordere Ende des Achslenkers 3 angeformt oder aber separat am vorderen Ende des Achslenkers 3 befestigt.

Die teilkreisförmige oder teilbogenförmige Öffnung 56 mit dem Teilkreismittelpunkt 14 besitzt eine Radialerstreckung der Angriffsfläche von mindestens 180°.

Der Haken 55 bildet eine teilkreisförmige beziehungsweise teilbogenförmige Angriffsfläche 31, 32 für das Hebelwerkzeug 20 aus, wobei die teilkreisförmige oder teilbogenförmige Öffnung 56 in seitlicher Kontur der Angriffsfläche 31, 32 eine Radialerstreckung von mindestens 180° besitzt, sodass auch hier die Angriffsfläche 31, 32 in eine erste Teilfläche 31 und eine zweite Teilflächen 32 unterteilt werden kann, die einander zugewandt sind.

Vorzugsweise greift das Hebelwerkzeug 20 von der Unterseite der Stütze 1 oder aber wie in Figur 7 gezeigt durch eine vordere Öffnung 22 an der Stütze 1 in die durch den Haken 55 geformte Auswölbung ein. Am Haken 55 kann je nach Anforderung ein Ansatz 60 zur Anlage eines Stoßdämpfers angeformt oder befestigt sein.

Eine solche Lenkeranordnung kann selbstverständlich auf beiden Seiten des Fahrzeugs verwendet werden, und ist nicht auf die Verwendung für Nutzfahrzeuge bzw. Nutzfahrzeuganhängern beschränkt.

### Bezugszeichenliste

- 1: Stütze
- 2: Oberseite
- 3: Achslenker
- 4: Bolzen
- 5: Durchgangsöffnung
- 6: Seitenwand
- 7: Seitenwand
- 8: Vorderwand
- 9: Ausnehmung (Achslenker)
- 10: Mutter
- 11: Unterlegscheibe
- 12: Spureinstellplatte
- 15: Materialvorsprung
- 16: Öffnung
- 20: Hebelwerkzeug
- 21: Ansatz
- 22: Öffnung
- 25: Halbschale
- 31: Angriffsfläche
- 32: Angriffsfläche
- 33: Abstützfläche
- 34: Abstützfläche
- 35: Distanzstück
- 36: Stahlbuchse
- 37: Gummiring
- 38: Stirnfläche
- 40: hinterer Achslenkerabschnitt
- 41: vorderer Achslenkerabschnitt
- 45: Ausnehmung
- 46: Vorsprung
- 47: Langloch
- 48: Lochraster
- 50: Vorsprung
- 55: Haken
- 56: Öffnung
- 60: Ansatz

- L: Fahrzeuglängsachse
- M: Teilkreismittelpunkt

## Patentansprüche

1. Lenkeranordnung für ein Fahrzeug, wobei die Lenkeranordnung mindestens einen sich in Fahrzeuglängsrichtung erstreckenden Achslenker (3), einen an dem Achslenker (3) quer zur Fahrzeuglängsrichtung befestigten Achskörper, eine chassisfest montierte Stütze (1) zur schwenkbaren Lagerung des Achslenkers (3) mittels eines durch die Stütze (1) und den Achslenker (3) quer zur Fahrzeuglängsrichtung hindurchführenden Bolzens (4), Verstellmittel zum Verschieben des Achslenkers (3) relativ zu der Stütze (1) in Fahrzeuglängsrichtung, sowie Positioniermittel zum Fixieren der Längsposition des Achslenkers (3) relativ zu der Stütze (1), sowie ein Hebelwerkzeug (20) zur Spureinstellung umfasst, wobei die Verstellmittel aus mindestens einer Angriffsfläche (31, 32) an dem Achslenker (3) oder einem achslenkerfesten Bauteil, sowie mindestens einer chassisfesten Abstützfläche (33, 34) zur Anlage des Hebelwerkzeugs (20) bestehen, **dadurch gekennzeichnet, dass** die Angriffsfläche (31, 32) zweigeteilt ist und sich aus einer ersten Teilfläche (31) und einer zweiten Teilfläche (32) zusammensetzt, die jeweils in Fahrzeuglängsrichtung gerichtet sind, jedoch in einander entgegengesetzte Richtung weisen, dass die Angriffsfläche (31, 32) als eine Ausnehmung (30) an dem Achslenker (3) bzw. dem achslenkerfesten Bauteil ausgebildet ist, und dass das Hebelwerkzeug (20) zur Spureinstellung sowohl an einer Teilfläche der Angriffsfläche (31, bzw. 32), als auch an einer Teilfläche der Abstützfläche (33, 34) unmittelbar abstützbar ausgebildet ist.

2. Lenkeranordnung nach Anspruch 1, **dadurch gekennzeichnet, dass** die beiden Teilflächen (31, 32) einander abgewandt sind.

3. Lenkeranordnung nach Anspruch 1, **dadurch gekennzeichnet, dass** die beiden Teilflächen (31, 32) einander zugewandt sind.

4. Lenkeranordnung nach einem der Ansprüche 1 bis 3, **dadurch gekennzeichnet, dass** die Abstützfläche (33, 34) zweigeteilt ist und sich aus einer ersten Teilfläche (33) und einer zweiten Teilfläche (34) zusammensetzt, die jeweils in Fahrzeuglängsrichtung gerichtet sind, jedoch in einander entgegengesetzte Richtung weisen.

5. Lenkeranordnung nach Anspruch 4, **dadurch gekennzeichnet, dass** die beiden Teilflächen (33, 34) einander zugewandt sind.

6. Lenkeranordnung nach Anspruch 4, **dadurch gekennzeichnet, dass** die beiden Teilflächen (33, 34) einander abgewandt sind.

7. Lenkeranordnung nach einem der Ansprüche 1 bis 6, **dadurch gekennzeichnet, dass** die Angriffsfläche (31, 32) und die Abstützfläche (33, 34) quer zur Fahrzeuglängsrichtung zueinander beabstandet sind, wobei der Abstand zwischen 1 cm und 5 cm liegt.

8. Lenkeranordnung nach einem der Ansprüche 1 bis 7, **dadurch gekennzeichnet, dass** die Ausnehmung (30) eine kantenförmige oder zumindest teilkreisförmige Kontur aufweist.

9. Lenkeranordnung nach einem der vorangehenden Ansprüche, **dadurch gekennzeichnet, dass** die mindestens eine chassisfeste Abstützfläche (33, 34) durch eine Ausnehmung (22) oder einen Ansatz (50) an der Stütze ausgebildet ist.

10. Lenkeranordnung nach Anspruch 9, **dadurch gekennzeichnet, dass** die Ausnehmung (22) oder der Ansatz (50) an einer der Seitenwände (6, 7) oder der Vorderwand (8) der Stütze (1) ausgebildet ist.

11. Lenkeranordnung nach Anspruch 1, **dadurch gekennzeichnet, dass** die Positioniermittel und die Verstellmittel an einer Seitenwand (6, 7) der Stütze (1) beabstandet voneinander angeordnet sind.

12. Lenkeranordnung nach Anspruch 11, **dadurch gekennzeichnet, dass** die Positioniermittel und die Verstellmittel sowohl an der inneren und äußeren Seitenwand (6, 7) der Stütze (1), oder nur an einer der beiden Seitenwände (6, 7) angeordnet sind.

13. Lenkeranordnung nach einem der vorangehenden Ansprüche, **dadurch gekennzeichnet, dass** die Positioniermittel eine den Bolzen (4) verzurrende Mutter (10) und eine Unterlegscheibe (11) umfassen.

14. Verfahren zum Verschieben eines Achslenkers (3) in Fahrzeuglängsrichtung eines Fahrzeugs, wobei der Achslenker (3) Bestandteil einer sich in Fahrzeuglängsrichtung erstreckenden Lenkeranordnung ist, einen sich quer zur Fahrzeuglängsrichtung erstreckenden Achskörper einer Fahrzeugachse kreuzt, an einer chassisfest montierten Stütze (1) mittels eines durch die Stütze (1) und den Achslenker (3) quer zur Fahrzeuglängsrichtung hindurchführenden Bolzens (4) schwenkbar gelagert ist, mittels Verstellmitteln relativ zu der Stütze (1) in Fahrzeuglängsrichtung verschiebbar ist, mittels Positioniermitteln bezüglich seiner Längsposition relativ zu der Stütze (1) fixierbar ist, **gekennzeichnet durch** Verschieben des Achslenkers (3) durch gleichzeitigen unmittelbaren Eingriff eines Hebelwerkzeugs (20) an mindestens einer unmittelbar an dem Achslenker (3) befindlichen Angriffsfläche (31, 32) und an mindestens einer chassisfesten Abstützfläche (33, 34).

15. Verfahren nach Anspruch 14, **dadurch gekennzeichnet, dass** die Angriffsfläche (31, 32) zweigeteilt ist und sich aus einer ersten Teilfläche (31) und einer zweiten Teilfläche (32) zusammensetzt, dass die Abstützfläche (33, 34) zweigeteilt ist und sich aus einer ersten Teilfläche (33) und einer zweiten Teilfläche (34) zusammensetzt und dass sich das Hebelwerkzeug (20) beim Hebelvorgang zugleich an einer der Teilflächen der Angriffsfläche (31, 32), als auch an einer der Teilflächen der Abstützfläche (33, 34) abstützt.

## Claims

1. Control arm assembly for a vehicle, wherein the control arm assembly comprises at least one axle control arm (3) which extends in the vehicle longitudinal direction, an axle body which is fastened to the axle control arm (3) so as to be transverse to the vehicle longitudinal direction,
a support (1) which for pivotably mounting the axle control arm (3) by means of a pin (4) that passes through the support (1) and the axle control arm (3) so as to be transverse to the vehicle longitudinal direction is fixedly assembled on the chassis, adjustment means for displacing the axle control arm (3) relative to the support (1) in the vehicle longitudinal direction, as well as
positioning means for fixing the longitudinal position of the axle control arm (3) relative to the support (1), as well as
a lever tool (20) for adjusting the track,
wherein the adjustment means are composed of at least one engagement face (31, 32) on the axle control arm (3) or a component fixed to the axle control arm, as well as at least one support face (33, 34) which for bearing the lever tool (20) is fixed to the chassis,
**characterized in that** the engagement face (31, 32) is in two parts and is composed of a first sub-face (31) and a second sub-face (32) which are in each case directed in the vehicle longitudinal direction but point in mutually opposite directions, **in that** the engagement face (31, 32) is configured as a clearance (30) on the axle control arm (3), or the component fixed to the axle, respectively, and **in that** the lever tool (20) for adjusting the track is configured so as to be able to be supported directly on a sub-face of the engagement face (31, or 32, respectively) as well as on a sub-face of the support face (33, 34).

2. Control arm assembly according to Claim 1, **characterized in that** the two sub-faces (31, 32) face away from one another.

3. Control arm assembly according to Claim 1, **characterized in that** the two sub-faces (31, 32) face one another.

4. Control arm assembly according to one of Claims 1 to 3,
**characterized in that** the support face (32, 34) is in two parts and is composed of a first sub-face (33) and a second sub-face (34) which are in each case directed in the vehicle longitudinal direction but point in mutually opposite directions.

5. Control arm assembly according to Claim 4, **characterized in that** the two sub-faces (33, 34) face one another.

6. Control arm assembly according to Claim 4, **characterized in that** the two sub-faces (33, 34) face away from one another.

7. Control arm assembly according to one of Claims 1 to 6,
**characterized in that** the engagement face (31, 32) and the support face (33, 34) transversely to the vehicle longitudinal direction are mutually spaced apart, wherein the spacing is between 1 cm and 5 cm.

8. Control arm assembly according to one of Claims 1 to 7,
**characterized in that** the clearance (30) has a contour in the shape of an edge or of at least a divided circle.

9. Control arm assembly according to one of the preceding claims,
**characterized in that** the at least one support face (33, 34) fixed to the chassis is configured by a clearance (22) or an appendage (50) on the support.

10. Control arm assembly according to Claim 9, **characterized in that** the clearance (22) or the appendage (50) is configured on one of the lateral walls (6, 7) or the front wall (8) of the support (1) .

11. Control arm assembly according to Claim 1, **characterized in that** the positioning means and the adjustment means are disposed so as to be mutually spaced apart on a lateral wall (6, 7) of the support (1).

12. Control arm assembly according to Claim 11, **characterized in that** the positioning means and the adjustment means are disposed on the inner and the outer lateral wall (6, 7) of the support (1), or only on one of the two lateral walls (6, 7).

13. Control arm assembly according to one of the preceding claims,
**characterized in that** the positioning means comprises a nut (10) and a washer (11), said nut (10) securing the pin (4).

14. Method for displacing an axle control arm (3) in the vehicle longitudinal direction of a vehicle, wherein the axle control arm (3) is a component part of a control arm assembly that extends in the vehicle longitudinal direction,
crosses an axle body of a vehicle axle that extends transversely to the vehicle longitudinal direction, by means of a pin (4) that passes through the support (1) and the axle control arm (3) so as to be transverse to the vehicle longitudinal direction is pivotably mounted on a support (1) which is fixedly assembled on the chassis,
by means of positioning means is able to be fixed in terms of the longitudinal position of said axle control arm (3) relative to the support (1), **characterized by** displacing the axle control arm (3) by way of a simultaneous direct engagement of a lever tool (20) on at least one engagement face (31, 32) which is situated directly on the axle control arm (3) and/or at least one support face (33, 34) fixed to the chassis.

15. Method according to Claim 14,
**characterized in that** the engagement face (31, 32) is in two parts and is composed of a first sub-face (31) and a second sub-face (32), **in that** the support face (33, 34) is in two parts and is composed of a first sub-face (33) and a second sub-face (34), and **in that** the lever tool (20) in the levering procedure is supported simultaneously on one of the sub-faces of the engagement face (31, 32) as well is on one of the sub-faces of the support face (33, 34) .

## Revendications

1. Arrangement de suspension pour un véhicule, l'arrangement de suspension comprenant au moins un bras de suspension (3) s'étendant dans la direction longitudinale de véhicule, un corps d'essieu solidaire du bras de suspension (3) transversalement à la direction longitudinale de véhicule, un support (1) solidaire du châssis pour le montage pivotant du bras de suspension (3) au moyen d'un boulon (4) passant à travers le support (1) et le bras de suspension (3) transversalement à la direction longitudinale de véhicule, des moyens de réglage pour déplacer le bras de suspension (3) par rapport au support (1) dans la direction longitudinale de véhicule, ainsi que des moyens de positionnement pour fixer la position longitudinale du bras de suspension (3) par rapport au support (1), ainsi qu'un outil faisant levier (20) pour le réglage du parallélisme, les moyens de réglage étant composés d'au moins une surface d'attaque (31, 32) au niveau du bras de suspension (3) ou d'un composant solidaire du bras de suspension, ainsi que d'au moins une surface d'appui (33, 34) solidaire du châssis pour l'application de l'outil faisant levier (20),
**caractérisé en ce que** la surface d'attaque (31, 32) est divisée en deux et se compose d'une première surface partielle (31) et d'une deuxième surface partielle (32) qui sont respectivement dirigées dans la direction longitudinale de véhicule mais sont orientées dans des directions mutuellement opposées, **en ce que** la surface d'attaque (31, 32) est réalisée sous la forme d'un creux (30) sur le bras de suspension (3) ou le composant solidaire du bras de suspension, et **en ce que** l'outil faisant levier (20) est réalisé pour le réglage du parallélisme de manière à pouvoir prendre un appui direct à la fois au niveau d'une surface partielle de la surface d'attaque (31 ou 32) et au niveau d'une surface partielle de la surface d'appui (33, 34).

2. Arrangement de suspension selon la revendication 1, **caractérisé en ce que** les deux surfaces partielles (31, 32) sont détournées l'une de l'autre.

3. Arrangement de suspension selon la revendication 1, **caractérisé en ce que** les deux surfaces partielles (31, 32) sont tournées l'une vers l'autre.

4. Arrangement de suspension selon l'une quelconque des revendications 1 à 3, **caractérisé en ce que** la surface d'appui (33, 34) est divisée en deux et se compose d'une première surface partielle (33) et d'une deuxième surface partielle (34) qui sont respectivement dirigées dans la direction longitudinale de véhicule mais sont orientées dans des directions mutuellement opposées.

5. Arrangement de suspension selon la revendication 4, **caractérisé en ce que** les deux surfaces partielles (33, 34) sont tournées l'une vers l'autre.

6. Arrangement de suspension selon la revendication 4, **caractérisé en ce que** les deux surfaces partielles (33, 34) sont détournées l'une de l'autre.

7. Arrangement de suspension selon l'une quelconque des revendications 1 à 6, **caractérisé en ce que** la surface d'attaque (31, 32) et la surface d'appui (33, 34) sont espacées l'une de l'autre transversalement à la direction longitudinale de véhicule, la distance étant comprise entre 1 cm et 5 cm.

8. Arrangement de suspension selon l'une quelconque des revendications 1 à 7, **caractérisé en ce que** le creux (30) présente un contour en forme de bord ou au moins en forme de cercle partiel.

9. Arrangement de suspension selon l'une quelconque des revendications précédentes, **caractérisé en ce que** ladite au moins une surface d'appui (33, 34) solidaire du châssis est réalisée par un creux (22) ou une saillie (50) sur le support.

10. Arrangement de suspension selon la revendication 9, **caractérisé en ce que** le creux (22) ou la saillie (50) est réalisé(e) sur l'une des parois latérales (6, 7) ou la paroi avant (8) du support (1).

11. Arrangement de suspension selon la revendication 1, **caractérisé en ce que** les moyens de positionnement et les moyens de réglage sont disposés à distance les uns des autres sur une paroi latérale (6, 7) du support (1).

12. Arrangement de suspension selon la revendication 11, **caractérisé en ce que** les moyens de positionnement et les moyens de réglage sont disposés à la fois sur la paroi latérale intérieure et la paroi latérale extérieure (6, 7) du support (1) ou uniquement sur l'une des deux parois latérales (6, 7).

13. Arrangement de suspension selon l'une quelconque des revendications précédentes, **caractérisé en ce que** les moyens de positionnement comprennent un écrou (10) amarrant le boulon (4) et une rondelle (11).

14. Procédé de déplacement d'un bras de suspension (3) dans la direction longitudinale de véhicule d'un véhicule, dans lequel le bras de suspension (3) fait partie d'un arrangement de suspension s'étendant dans la direction longitudinale de véhicule, croise un corps d'essieu d'un essieu de véhicule s'étendant transversalement à la direction longitudinale de véhicule, est monté pivotant sur un support (1), monté en étant solidaire du châssis, au moyen d'un boulon (4) passant à travers le support (1) et le bras de suspension (3) transversalement à la direction longitudinale de véhicule, peut être déplacé au moyen de moyens de réglage par rapport au support (1) dans la direction longitudinale de véhicule, peut être solidaire du moyen de moyens de positionnement quant à sa position longitudinale par rapport au support (1),
**caractérisé par** le déplacement du bras de suspension (3) par une mise en prise directe simultanée d'un outil faisant levier (20) au niveau d'au moins une surface d'attaque (31, 32) se trouvant directement sur le bras de suspension (3) et au niveau d'au moins une surface d'appui (33, 34) solidaire du châssis.

15. Procédé selon la revendication 14, **caractérisé en ce que** la surface d'attaque (31, 32) est divisée en deux et se compose d'une première surface partielle (31) et d'une deuxième surface partielle (32), **en ce que** la surface d'appui (33, 34) est divisée en deux et se compose d'une première surface partielle (33) et d'une deuxième surface partielle (34), et **en ce que** l'outil faisant levier (20) prend appui lors de l'opération de levier à la fois au niveau d'une des surfaces partielles de la surface d'attaque (31, 32) et au niveau d'une des surfaces partielles de la surface d'appui (33, 34).
